# EUROPEAN PATENT SPECIFICATION

(11) **EP 3 155 797 B1**
(45) Date of publication and mention of the grant of the patent: **20.03.2019**
(21) Application number: 15805885.9
(22) Date of filing: 09.06.2015
(51) Int. Cl.: H04M 11/00, H04W 4/16, H04M 3/493, H04M 3/42

(54) **VOICE DISPLAYING**
STIMMENANZEIGE
AFFICHAGE VOCAL

(30) Priority: 11.06.2014 CN 201410258360
(43) Date of publication of application: 19.04.2017
(73) Proprietor: Alibaba Group Holding Limited, Grand Cayman (KY)
(72) Inventor: LU, Zhenyu, Hangzhou 311121 (CN); ZHENG, Chenxing, Hangzhou 311121 (CN)
(74) Representative: Barker Brettell LLP
(86) International application number: PCT/US2015/034932
(87) International publication number: WO 2015/191601

(56) References cited:
- WO-A1-2009/012689
- WO-A1-2010/135880
- US-A1- 2004 122 941
- US-A1- 2005 081 152
- US-A1- 2005 091 058
- US-A1- 2007 036 294
- US-A1- 2007 036 294
- US-A1- 2007 263 816
- US-A1- 2010 158 210
- US-B1- 6 658 093
- US-B1- 6 658 093
- US-B1- 6 940 953
- US-B1- 8 369 495

## Description

### CROSS-REFERENCE TO RELATED PATENT APPLICATION

This application claims foreign priority to Chinese Patent Application No. 201410258360.1 filed on June 11, 2014, entitled "Voice Displaying Method and System".

### TECHNICAL FIELD

The present disclosure relates to the field of network technology, and, more particularly, to a voice displaying method and system.

### BACKGROUND

Interactive voice response (IVR) is a voice value-added service. By displaying to a user a corresponding voice prompt, together with the user's feedback operation, corresponding voice services are provided to the user. For example, the user, by dialing a specified phone number and making a corresponding selection according to the displayed voice prompt, inquires account information of the user, and further executes corresponding operations such as information modification of the account.

However, the conventional IVR follows a fixed voice display process when performing voice display, and with increase in services, the voice display process is usually divided into many stages, so that the user needs to perform a feedback operation multiple times to access to the corresponding services, which not only results in long voice display time and call loss but also occupies many system resources.

US 8,369,495 discloses an interactive voice response system that takes into account current and/or historical call data in determining navigation logic for a specific call. The method involves determining a preferred navigation menu to implement for the current call, the preferred navigation menu comprising call menu options of the initial navigation menu that can be selected by the current caller and rearranged into a different sequence and renumbered compared to the initial navigation menu.

US 2004/122941 discloses a method for providing customized interactive voice response menus which includes monitoring user interactions with an interactive voice response system. Data concerning the user interactions can be stored. A request to initiate an interactive voice response session can be received. The interactive voice response system can determine an identity for a user making the request. The interactive voice response system can generate a customized menu for the user. At least a portion of the customized menu can be based upon the usage data. The customized menu can be presented to the user.

WO 2010/135880 discloses an interactive voice response system and a realization method thereof. The method includes that: after receiving the call request, the IVR system queries the user information of the user in an online charging system according to the user identify in the call request, obtains an IVR function menu customized for the user according to the user information, and provides various function services in the IVR function menu for the user.

WO 2009/012689 discloses a generating method of automatic voice response menu. Said method comprises: gathering the historical action data of telecommunication service transacted by the subscriber; analyzing the historical action data of the subscriber; generating the IVR menu of the subscriber according to the analyzing result. A generating device of IVR menu, an IVR system, a setting method of IVR menu and a setting device of IVR menu are disclosed.

US 6,658,093 discloses a system and methods for real-time, interactive transmission of information about travel schedules and creation of travel schedules. A user defines desired travel parameters, such as dates, times, costs and the like related to a travel component. Travel components are reviewed to determine if traveler parameters are triggered. If a travel component triggers traveler parameters, options for other travel components may be determined. A user may be contacted and communicated information about the travel component and options, thereby allowing a user to interactively create a travel schedule.

US 6,940,953 discloses a method and system for generating TML (an XML based language) and formatting reports. The method and system operate in conjunction with an interactive voice broadcasting system and are used to develop active voice pages-TML documents that are to used generate dynamic voice menus that drive the interaction between a user and an interactive voice broadcasting system.

US 2007/036294 discloses a system for personalizing interactive services provided to users of voice and data enabled communications devices, including users of SMS, MMS and WAP enabled communications devices. The system is designed to access source information associated with a particular requester for a service and to map the source information to personalization information associated with a user of the system. The source information is extracted in various embodiments from different types of communications channels. The personalization information is employed by the system to influence the behavior of the system while providing an interactive service to the user.

US 2005/081152 discloses a method for providing help within an interactive voice response application which can include the step of determining an interactive voice response event corresponding to a request for help. The event can be classified as a default help request, which can be a system initiated help request, or a user initiated help request. If the event is classified as a default help request, a time for receiving user input can be set to a default value. If, however, the event is classified as a user initiated help request, the time for receiving user input can be set to a value less than the default value. The interactive voice response application can take programmatic action upon expiration of the time for receiving user input.

### SUMMARY

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter. The term "techniques," for instance, may refer to apparatus(s), system(s), method(s) and/or computer-readable instructions as permitted by the context above and throughout the present disclosure.

The technical problem to be solved by the present disclosure relates to providing a voice display method and a related system, which enables users to gain access to corresponding services without performing an operation multiple times, thereby shortening the voice display time, decreasing the call loss, and reducing the usage of system resource.

In view of the above, the technical solution in the present disclosure for solving the technical problem is as follows.

The present disclosure provides a voice display method. An IVR system establishes an IVR call connection with a current user. The IVR system sends a service recommendation request for the current user to a voice recommendation system to acquire one or more voice service modules recommended to the current user via the voice recommendation system.

The IVR system assembles the voice service modules recommended to the current user into a menu for voice display. The voice service modules recommended to the current user are voice service modules matched with service demand data of the current user among preset voice service modules.

Optionally, the operation of assembling the voice service modules recommended to the current user into a menu for voice display specifically includes the following operations.

If a number of the voice service modules recommended to the current user is 1, the voice display for the voice service modules recommended to the current user is directly performed. If the number of the voice service modules recommended to the current user is greater than 1, an association operation between the voice service modules recommended to the current user and an interactive interface is performed, and the voice display for the voice service modules recommended to the current user is performed according to an association relationship.

Optionally, the operation of acquiring the voice service modules recommended to the current user via the voice recommendation system further includes the following operations.

One or more human service modules recommended to the current user are acquired via the voice recommendation system. If the number of the voice service modules recommended to the current user is not equal to 0, the operation of assembling the voice service modules recommended to the current user into a menu for voice display is executed. If the number of the voice service modules recommended to the current user is equal to 0, and the number of the human service modules recommended to the current user is not equal to 0, any one of the human service modules recommended to the current user may be turned to.

Optionally, the operation of sending a service recommendation request for the current user to a voice recommendation system to acquire voice service modules recommended to the current user via the voice recommendation system includes the following operations.

The service recommendation request for the current user is sent to the voice recommendation system, so that the voice recommendation system acquires voice data input by the current user from the IVR system, converts the voice data into corresponding text data as the service demand data, and acquires the voice service modules recommended to the current user according to the service demand data and returns them to the IVR system.

Optionally, the operation of sending a service recommendation request for the current user to a voice recommendation system to acquire voice service modules recommended to the current user via the voice recommendation system includes the following operations.

The service recommendation request for the current user is sent to the voice recommendation system, so that the voice recommendation system acquires account information of the current user from the IVR system, acquires network behavior data of the current user as service demand data based on the account information, and acquires the voice service modules recommended to the current user according to the service demand data and returns them to the IVR system.

Optionally, the operation of sending a service recommendation request for the current user to a voice recommendation system to acquire voice service modules recommended to the current user via the voice recommendation system includes the following operations.

The service recommendation request for the current user to the voice recommendation system, so that the voice recommendation system acquires voice data input by the current user and account information of the current user from the IVR system, converts the voice data into corresponding text data and acquires network behavior data of the current user based on the account information, uses the text data and the network behavior data together as service demand data, and acquires the voice service modules recommended to the current user according to the service demand data and returns them to the IVR system;

For example, the voice service modules matched with the service demand data of the current user may be an intersection or a union between the voice service modules matched with the text data and the voice service modules matched with the network behavior data.

Optionally, the method may further include the following operations. When assembling the voice service modules recommended to the current user into a menu, the IVR system sets the voice service modules matched with both the text data and the network behavior to have a high priority.

Optionally, after the assembling the voice service modules recommended to the current user into a menu and performing voice display, the method may further include the following operations.

The IVR system acquires interface operation information input by the current user. The IVR system acquires a service operation corresponding to the interface operation information based on the menu assembly information. The IVR system executes the corresponding service operation.

The present disclosure also provides an IVR system, which includes an establishing unit, a sending unit, an assembling unit, and a displaying unit.

The establishing unit establishes an IVR call connection with a current user. The sending unit sends a service recommendation request for the current user to a voice recommendation system to acquire one or more voice service modules recommended to the current user via the voice recommendation system. The assembling unit assembles the voice service modules recommended to the current user into a menu for voice display by the displaying unit.

For example, the voice service modules recommended to the current user are specifically voice service modules matched with service demand data of the current user among preset voice service modules.

Optionally, the operation that the assembling unit assembles the voice service modules recommended to the current user into a menu for voice display by the displaying unit may include the following.

If the number of the voice service modules used by the assembling unit and recommended to the current user is equal to 1, the voice display for the voice service modules recommended to the current user is performed by the displaying unit directly.

If the number of the voice service modules used by the assembling module and recommended to the current user is greater than 1, an association operation between the voice service modules recommended to the current user and an interactive interface is performed, and the voice display for the voice service modules recommended to the current user is performed by the displaying unit according to the association relationship.

Optionally, the sending unit, when acquiring the voice service modules recommended to the current user via the voice recommendation system, further acquires one or more human service modules recommended to the current user via the voice recommendation system.

If the number of the voice service modules recommended to the current user is not equal to 0, the assembling unit executes the assembling of the voice service modules recommended to the current user into a menu for voice display.

If the number of the voice service modules recommended to the current user is equal to 0, and the number of the human service modules recommended to the current user is not equal to 0, the assembling unit turns to any one of the human service modules recommended to the current user.

Optionally, the sending unit sends a service recommendation request for the current user to a voice recommendation system to acquire voice service modules recommended to the current user via the voice recommendation system, which may include the following operations.

The sending unit sends a service recommendation request for the current user to a voice recommendation system, so that the voice recommendation system acquires voice data input by the current user from the IVR system, converts the voice data into corresponding text data as the service demand data, and acquires the voice service modules recommended to the current user according to the service demand data and returns them to the IVR system.

Optionally, the sending unit sends a service recommendation request for the current user to a voice recommendation system to acquire voice service modules recommended to the current user via the voice recommendation system, which may include the following operations:
The sending unit sends the service recommendation request for the current user to the voice recommendation system, so that the voice recommendation system acquires account information of the current user from the IVR system, acquires network behavior data of the current user as the service demand data based on the account information, and acquires the voice service modules recommended to the current user according to the service demand data and returns them to the IVR system.

Optionally, the sending unit sends a service recommendation request for the current user to a voice recommendation system to acquire voice service modules recommended to the current user via the voice recommendation system, which may include the following operations:
The sending unit sends the service recommendation request for the current user to the voice recommendation system, so that the voice recommendation system acquires voice data input by the current user and account information of the current user from the IVR system, converts the voice data into corresponding text data, acquires network behavior data of the current user based on the account information, uses the text data and the network behavior data together as the service demand data, and acquires the voice service modules recommended to the current user according to the service demand data and returns them to the IVR system.

The voice service modules matched with the service demand data of the current user may be an intersection or union between the voice service modules matched with the text data and the voice service modules matched with the network behavior data.

Optionally, the assembling unit, when assembling the voice service modules recommended to the current user into a menu, further sets a voice service module matched with both the text data and the network behavior to have a high priority.

Optionally, the system further includes the following units.

A first acquisition unit, after the assembling unit assembles the voice service modules recommended to the current user into a menu to be displayed by the displaying unit, acquires interface operation information input by the current user.

A second acquisition unit acquires a service operation corresponding to the interface operation information based on the menu assembly information.

A service execution unit executes the corresponding service operation.

As shown from the above technical solution that, in the example embodiments of the present disclosure, after establishing the IVR call connection with the current user, the IVR system may send the service recommendation request for the current user to the voice recommendation system to acquire the voice service modules recommended to the current user, and thereafter, the IVR system assembles the voice service modules recommended to the current user into a menu for display. The voice service modules recommended to the current user are the voice service modules matched with the service demand data of the current user among the preset voice service module, so that the IVR system no longer displays according to a fixed voice display process, and displays the voice service module that better meets the demand of the current user in a personalized manner. Therefore, the current user, when acquiring corresponding services, is able to locate desirable voice service modules without executing feedback operations repeatedly, which shortens the voice display time and decreases the call loss, thereby reducing the usage of system resource.

### BRIEF DESCRIPTION OF THE DRAWINGS

To clearly describe the technical solutions in the example embodiments of the present disclosure, the following briefly introduces the accompanying drawings needed for describing the example embodiments. Apparently, the accompanying drawings in the following description merely show some example embodiments of the present disclosure, and a person of ordinary skill in the art may still derive other drawings from these accompanying drawings without using creative efforts.
FIG. 1 is a flow chart of a first example embodiment of a voice display method according to the present disclosure.
FIG. 2 is a flow chart of a second example embodiment of the voice display method according to the present disclosure.
FIG. 3 is a flow chart of a third example embodiment of the voice display method according to the present disclosure.
FIG. 4 is a flow chart of a fourth example embodiment of the voice display method according to the present disclosure.
FIG. 5 is a flow chart of a fifth example embodiment of the voice display method according to the present disclosure.
FIG. 6 is a diagram of providing corresponding services to a user according to a user's feedback operation according to an example embodiment of the present disclosure.
FIG. 7 is a structural diagram of a first example embodiment of an IVR system according to the present disclosure.
FIG. 8 is a structural diagram of a second embodiment of the IVR system according to the present disclosure.

### DETAILED DESCRIPTION

To help those skilled in the art better understand the technical solutions in the present disclosure, the technical solutions in the example embodiments of the present disclosure will be described clearly and completely below with reference to the accompanying drawings in the embodiments of the present disclosure. Obviously, the example embodiments described merely represent a part of the embodiments rather than all of the embodiments of the present disclosure. All other embodiments acquired by those skilled in the art based on the example embodiments in the present disclosure shall belong to the protection scope of the present disclosure

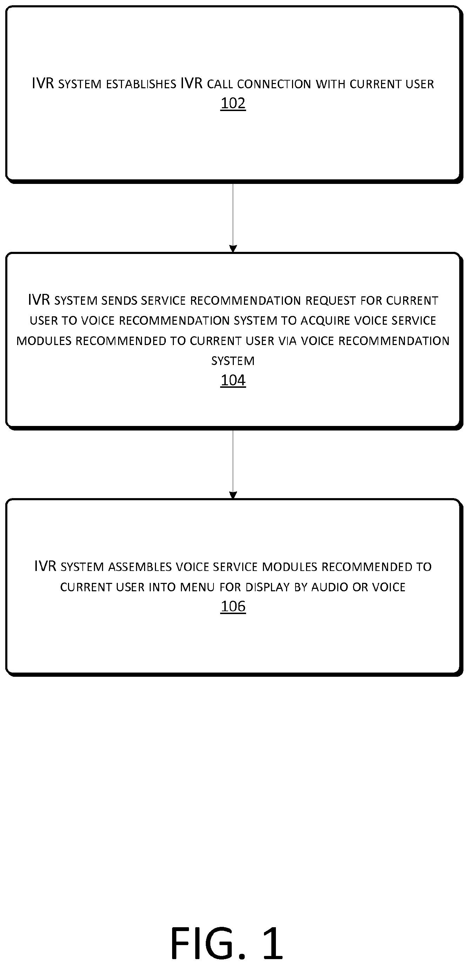

With reference to FIG. 1, the present disclosure provides a first example embodiment of the voice display method, which includes the following operations.

At 102, an IVR system establishes an IVR call connection with a current user.

In this step, the IVR system may establish the IVR call connection with the current user passively. For example, the user, when generating a service demand, establishes the IVR call connection with the IVR system by dialing the number of the IVR system actively. The IVR system may also establish the IVR call connection with the current user actively. For example, when detecting an abnormal situation in the user operation, such as continuous and repeated user login failure, the IVR system may initiate an IVR call request to the user actively. After that the user allows the call request, the IVR call connection is established.

At 104, the IVR system sends a service recommendation request for the current user to a voice recommendation system to acquire one or more voice service modules recommended to the current user via the voice recommendation system.

After the IVR call connection is established with the current user, unlike the conventional techniques, the techniques of the present disclosure no longer display according to a fixed voice display process, but send the service recommendation request for the current user to the voice recommendation system to acquire the voice service modules recommended to the current user from the voice recommendation system, thereby realizing personalized display to the current user.

In this step, the service recommendation request sent by the IVR system may have various forms, which indicate that the IVR system needs to perform a personalized voice display to the current user. For example, the IVR system may send data that indicates the demand of the current user directly or indirectly, such as the voice data input by the current user or the account information of the current user. At this time, the data that indicates the demand of the current user directly or indirectly may be used as the service recommendation request directly.

In this step, the voice service modules recommended to the current user are voice service modules matched with service demand data of the current user among preset voice service modules. That is, the service recommendation request enables the voice recommendation system to select voice service modules matched with the service demand data of the current user from the preset voice service modules, and returns them to the IVR system. Therefore, the content of the personalized display better meets the demand of the current user.

The service demand data of the current user indicates the service demand of the current user who establishes the IVR call connection with the IVR system. The example embodiment does not limit the mode of acquiring the service demand data, which may use the data actively input by the current user as the service demand data. For example, after establishing the IVR call with the IVR system, the current user may input voice data according to a voice prompt, and since the voice data represents the service demand of the current user, the voice data is converted into corresponding text data as the service demand data. Alternatively, the user's behavior may also be analyzed to acquire the service demand data. For example, during a period before and/or after the current user establishes the IVR call connection, corresponding network behavior data is generated, such as error information that the user logs into an incorrect password, and operation information of funds, since such network behavior data also reflects user's service demand, it is used as the service demand data. Certainly, the above text data and the network behavior data of the user may be used together as the service demand data.

At 106, the IVR system assembles the voice service modules recommended to the current user into a menu for display by voice or audio (or voice display).

After acquiring one or more voice service modules recommended to the user from a service recommendation system, the IVR system may further assemble the one or more voice service modules into a menu and display it to the current user to provide personalized services to the current user.

As shown from the above technical solution, in the example embodiment of the present disclosure, after establishing the IVR call connection with the current user, the IVR system may send the service recommendation request for the current user to the voice recommendation system to acquire the voice service modules recommended to the current user. Thereafter, the IVR system assembles the voice service modules recommended to the current user into a menu for display. The voice service modules recommended to the current user may be the voice service modules matched with the service demand data of the current user among the preset voice service modules, so that the IVR system no longer displays according to a fixed voice display process, but displays the voice service modules that better meet the demand of the current user in a personalized manner. Therefore, the current user, when acquiring corresponding services, is able to locate desirable voice service modules without executing feedback operations repeatedly, which shortens the voice display time and decreases the call loss, thereby reducing the usage of system resource.

In the example embodiment, if there is no module matched with the service demand data among the preset voice modules, i.e., the number of the voice service modules recommended to the current users is equal to 0, the IVR system may perform voice display according to a fixed voice display process directly.

It should be noted that, in the example embodiment, the preset voice service modules may exist in the form of sets. For example, a plurality of voice service module sets may be preset, wherein each voice service module set includes one or more voice service modules associated by levels. At this time, operations at 104 actually acquire the voice service module set recommended to the current user, and the voice service module set recommended to the current user is the voice service module set matched with the service demand data of the current user among the preset voice service module sets.

Next, an example is used for illustration. A password retrieval voice module set is divided into two levels of voice service modules. A first level of voice service modules is used for the user to select a retrieval mode: press "1" to indicate retrieval by a mobile phone, and press "2" to indicate retrieval by an E-mail. A second level of voice service modules includes two voice service sub-modules, which send voice prompts to perform a password retrieval operation by a mobile phone or E-mail respectively. If the service demand data of the user is the error information indicating the error of login password, and the matched password retrieval voice module set is selected, the IVR system finally displays the whole password retrieval voice module set to the user to provide the password retrieval service to the user.

In the example embodiment, when the voice service modules recommended to the current user are acquired from the voice recommendation system, the voice service modules will be assembled into a menu. Next, an example embodiment is used to illustrate a specific implementation for assembling the menu.

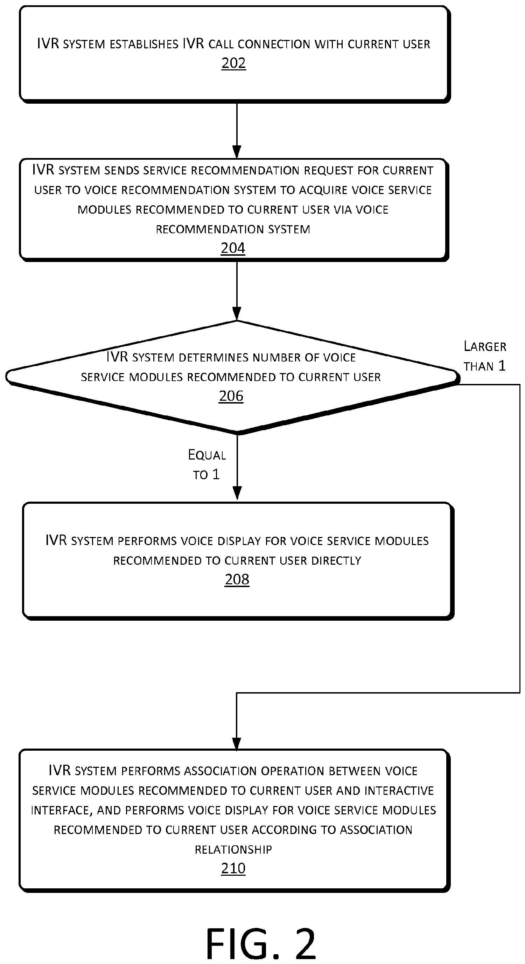

With reference to FIG. 2, the present disclosure provides a second example embodiment of the voice display method, which may include the following operations.

At 202, an IVR system establishes an IVR call connection with a current user.

In this step, the IVR system may establish the IVR call connection with the current user passively, or establish the IVR call connection with the current user actively.

At 204, the IVR system sends a service recommendation request for the current user to a voice recommendation system to acquire one or more voice service modules recommended to the current user via the voice recommendation system.

The voice service modules recommended to the current user are the voice service modules matched with the service demand data of the current user among the preset voice service modules.

The service demand data of the current user indicates the service demand of the current user who establishes the IVR call connection with the IVR system, which may specifically include text data converted from the voice data input by the current user, network behavior data of the current user acquired according to the account information of the current user, or a combination of the above two types of data.

At 206, the IVR system determines a number of the voice service modules recommended to the current user. If the number is 1, operations at 208 are executed. If the number is larger or greater than 1, operations at 210 are executed.

In the example embodiment, after the one or more voice service modules recommended to the current user and acquired from the voice recommendation system are assembled into a menu, the assembled menu is displayed by voice to the current user. During the assembling of the menu, an assembling policy will be selected according to the specific number of the abovementioned one or more voice service modules.

At 208, the IVR system performs voice display for the voice service modules recommended to the current user directly.

At this time, the number of the voice service modules recommended to the current user is 1, and therefore, during the specific assembling of the menu, such one voice service module is displayed by voice to the current user directly.

At 210, the IVR system performs an association operation between the voice service modules recommended to the current user and an interactive interface, and performs voice display for the voice service modules recommended to the current user according to the association relationship.

At this time, the number of the voice service modules recommended to the current user is at least 2, and therefore, when at least 2 voice service modules are voice display to the current user, the current user needs to select 1 corresponding voice service module according to his demand. Therefore, in this step, the at least two voice service modules are firstly associated with the interactive interface. For example, Key 1 is associated with the password retrieval voice module, and Key 2 is associated with a password modification voice module. Thereafter, the at least 2 voice service modules are displayed or announced by voice to the current user according to the association relationship between the voice service modules and the interactive interface. Displaying to the user according to the association relationship actually refers to displaying the association relationship to the current user. For example, when voice or audio "if password retrieval is needed, please press 1, and if the password needs to be modified, please press 2" is display to the current user, a service provided by corresponding voice service modules is acquired according to the user feedback operation.

When performing the association operation, the IVR system may associate the voice service modules recommended to the current user and a fixed menu with the interactive interface. For example, keys 1 to 4 are associated with four voice service modules recommended to the current user respectively, and key 0 is associated with the fixed menu. The fixed menu refers to a preset menu including pre-configured voice service modules, which will not vary with the change of the current user who establishes the IVR call connection with the IVR system. For example, the fixed menu may be a conventional menu in the conventional techniques. Although the fixed menu will not vary with the change of the current user, the composing form of the voice service modules in the fixed menu may be adjusted.

It should be noted that, in this step, before the menu is assembled, the voice service modules recommended by the current user may be optimized. For example, the number of the voice service modules may be limited in a present range, such as 4. Alternatively, some of the voice service modules may be set to have a high priority, thereby realizing the functions such as priority display.

As shown from the above technical solution, in the example embodiment, the techniques of the present disclosure emphasize that, according to the number of the voice service modules recommended to the current user, different policies are selected to assemble the voice service modules into the menu, and the assembled menu displayed by voice to the current user.

Actually, the example embodiment highlights how to display through the voice service modules to the current user. However, in some scenes, the user needs a higher level service. For example, when the current problem of the user is serious and cannot be solved by preset voice service modules, it is desirable to provide human services to the user. In fact, an ordinary IVR system switches to the human service system automatically. For example, when we are dialing a service hotline such as 10086, usually 1 key is reserved to switch to the human service directly. The following description describes the implementation of switching the user to the human service system in an example embodiment of the present disclosure.

When acquiring the voice service modules recommended to the current user via the voice recommendation system at 204, the IVR system may further execute acquiring human service modules recommended to the current user via the voice recommendation system.

If the voice service modules recommended to the current user is not equal to 0, it indicates that the voice service modules matched with the demand of the current user exist at this time, and therefore, no matter whether the voice recommendation system returns the human service modules or not, the human service modules are ignored, and operations at 206 of the embodiment will be executed.

If the number of the voice service modules recommended to the current user is equal to 0, and the number of the human service modules recommended to the current user is not equal to 0, it indicated that no voice service module matched with the demand of the current user exists at this time and only the human service modules exist. Therefore, switching to any one of the human service modules recommended to the current user implements turning to the artificial system, and at this time, operations at 206 of the example embodiment no longer needs to be executed.

In addition, if the number of the voice service modules recommended to the current user and the number of the human service modules recommended to the current user are both equal to 0, it indicates that no service module matched with the demand of the current user is acquired at this time, and the IVR system may perform the voice display according to a fixed voice display process.

In the example embodiments of the present disclosure, the IVR system acquires the voice service modules recommended to the current user via the voice recommendation system. The voice service modules refer to the voice service modules matched with the service demand data of the current user among the preset voice service modules. In fact, the service demand data may be acquired in many ways, such as from the data input by the current user actively, the network behavior data of the current user, or a combination of the above two types of data, which are illustrated according to the following three example embodiments.

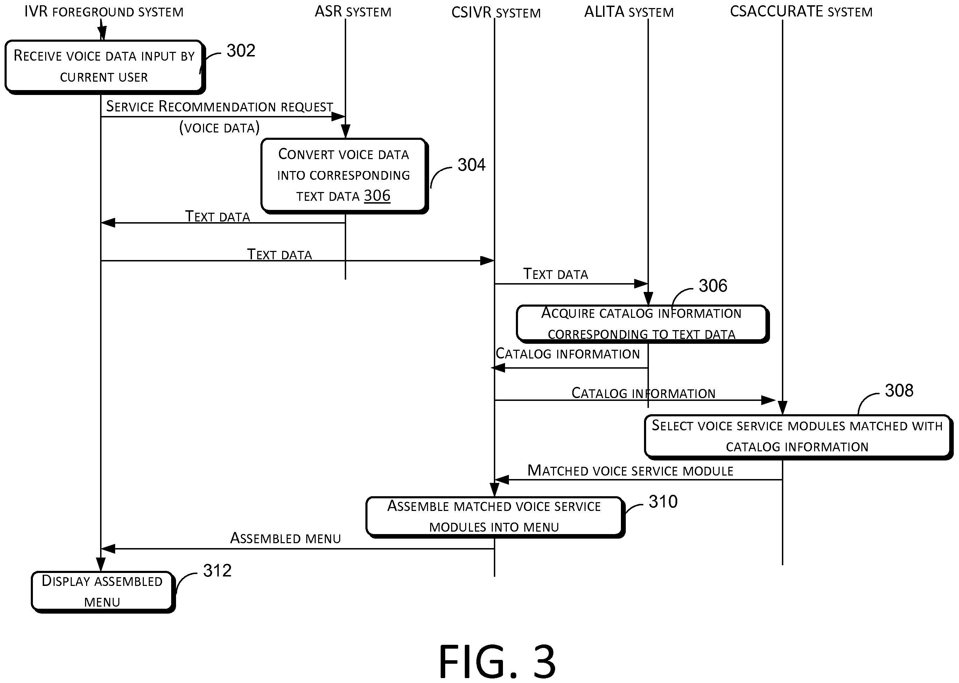

Referring to FIG. 3, the present disclosure provides a third embodiment of the voice display method. Unlike other embodiments, in this example embodiment, the service demand data is data input by the current user actively.

This example embodiment includes the following operations.

At a first step, the IVR system establishes an IVR call connection with the current user.

In this step, the IVR system may establish the IVR call connection with the current user passively, or establish the IVR call connection with the current user actively. At 302, the IVR system receives the voice data input by the current user.

At a second step, the IVR system sends a service recommendation request for the current user to the voice recommendation system, so that the voice recommendation system acquires voice data input by the current user from the IVR system, converts the voice data into corresponding text data as the service demand data at 304, and acquires one or more voice service modules recommended to the current user according to the service demand data and returns them to the IVR system.

The voice service modules recommended to the current user are the voice service modules matched with the service demand data of the current user among the preset voice service modules.

The IVR system may enable the user to ask a corresponding consulting question by displaying a corresponding voice prompt to the user. For example, the user who wants to consult on the problem of login failure may ask a consulting question "password is forgotten", "password is input incorrectly", "password is incorrect" and so on. The IVR system receives the consulting question proposed by the user as the voice data input by the current user. Apparently, the voice data reflects the service demand of the user. Therefore, the voice recommendation system acquires the voice data input by the current user from the IVR system. As shown in FIG. 3, in this step, the IVR system may send the service recommendation request for the current user to the voice recommendation system, and the request includes the voice data input by the current user, so that the voice recommendation system acquires the voice data from the IVR system.

Moreover, FIG. 3 further provides an example module composing form for the IVR system and the voice recommendation system of the embodiment. The IVR system may include an IVR foreground system and a CSIVR (i.e., Customer Service of Interactive Voice Response) system, and the voice recommendation system includes a CSACCURATE (i.e., an accurate service) system and an ASR (i.e., a voice text conversion) system. In this step, the IVR foreground system converts the voice data input by the current user into the corresponding text data via the ASR system, and sends the text data to the CSACCURATE system via the CSIVR system. It should be noted that the module composing mode in FIG. 3 will not limit the embodiments of the present disclosure.

In the example embodiment, at 306, catalog information may be acquired corresponding to the text data. At 308, the selection of the voice service modules matched with the text data may be made according to the catalog information corresponding to the text data. For example, the voice service modules matched with the text data in the embodiment are voice service modules matched with the catalog information. For instance, as shown in FIG. 3, the CSIVR system sends the text data "I forget the password" to an ALITA (Text Semantic Analysis) system, which performs semantic analysis according to a natural language processing (NLP) algorithm to acquire corresponding catalog information, for example, "password is forgotten", and returns it to the CSIVR system. Then the CSIVR system sends the catalog information to the CSACCURATE system, which finds the matched voice service modules recommended to the current user according to the catalog information. The catalog information may be preset to have corresponding voice service modules, and at this point, the voice service modules corresponding to the catalog information may be acquired directly as the finally selected result.

At a third step, at 310, the IVR system assembles the voice service modules recommended to the current user into a menu for voice display at 312.

The composing mode of the menu may refer to corresponding portion in the second example embodiment of the method, which will not be detailed herein. For example, the CSIVR system in the IVR system accomplishes the assembling process, and the IVR foreground system performs the voice display.

As shown from the above technical solution, in this example embodiment, the IVR system provides voice data input by the current user to the voice recommendation system, so that the voice recommendation system converts the voice data into corresponding text data to acquire the demand of the current user, thereby displaying the voice service modules that better meet the user demand to the current user.

In the following example embodiment, the current user acquires the user demand according to the network behavior data of the current user without inputting the voice data actively.

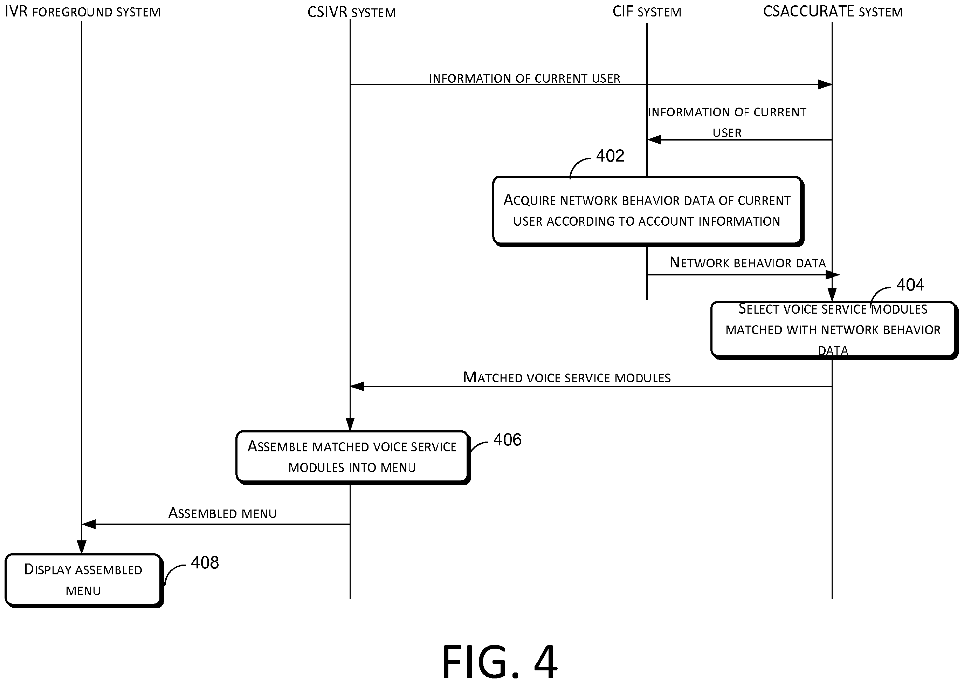

Referring to FIG. 4, the present disclosure provides a fourth example embodiment of the voice display method. Unlike other embodiments, in this example embodiment, the service demand data is the network behavior data of the current user.

The example embodiment includes the following operations.

At a first step, an IVR system establishes an IVR call connection with a current user.

In this step, the IVR system may establish the IVR call connection with the current user passively, or establish the IVR call connection with the current user actively such that the IVR system detects an abnormal behavior of the current user. For example, when detecting behavior error information of the current user in a network operation, the IVR system actively sends the IVR call connection request to the current user.

At a second step, the service recommendation request for the current user is sent to the voice recommendation system, so that the voice recommendation system acquires the account information of the current user from the IVR system, acquires the network behavior data of the current user as the service demand data based on the account information at 402, and acquires the voice service modules recommended to the current user according to the service demand data and returns them to the IVR system at 404.

The voice service modules recommended to the current user are the voice service modules matched with the service demand data of the current user among the preset voice service modules.

In the example embodiment, the network behavior data of the current user needs to be acquired. Thus the account information of the current user needs to be acquired firstly to determine the current user who establishes the IVR call connection with the IVR system. The account information of the current user may be input by the current user. For example the account information such as an ID card number input by the current user by voice prompt. Alternatively, a user incoming number (e.g., a mobile phone number) that is used to establishment the IVR call connection may be acquired directly as the account information of the current user. As shown in FIG. 4, in this step, the IVR system sends the service recommendation request for the current user to the voice recommendation system, and the request includes the account information of the current user, so that the voice recommendation system acquires the account information from the IVR system.

When the user is executing a network operation, corresponding network behavior data may be generated, and such network behavior data usually reflects the service demand of the user. For example, the network behavior data of the current user may include at least one of the following data: a network behavior type of the current user, a number of network behaviors of the current user, and behavior error information of the current user. The behavior error information reflects a user error when the user executes an operation. Thus it is possible for the user to propose relevant consulting questions relating to the operation error. The user's network behavior type and the number of user's network behavior indicate the type of the network operation executed by the user, and the number of network operation executed by the user respectively, which also reflect the current demand of the user. For example, if the user executes multiple times of financial operations, it indicates that it is possible for the user to propose relevant consulting questions relating to the financial problem.

The network behavior data of the current user may be acquired from one or more network systems (for example, an E-commerce system) corresponding to the voice recommendation system. For example, FIG. 4 provides an example module composing form of the IVR system and the voice recommendation system of the embodiment. The IVR system may include an IVR foreground system and a CSIVR system, and the voice recommendation system includes a CSACCURATE system and a CIF (i.e., Customer Information File) system. The CSIVR system sends the account information of the current user to the CSACCURATE, and the CSACCURATE system acquires the network behavior data of the current user from the CIF system according to the account information, such as login error information, and acquires matched voice service modules recommended to the current user according to the network behavior data. It should be noted that the example module composing form in FIG. 4 will not limit the embodiments of the present disclosure.

At a third step, the IVR system assembles the voice service modules recommended to the current user into a menu at 406 for voice display at 408.

The composing mode of the menu may refer to the relevant portion of the second example embodiment of the method, which will not be repeated in detail herein. For example, the CSIVR system in the IVR system accomplishes the assembling process, and the IVR foreground system performs the voice display.

As shown from the above technical solution that, in the embodiment, the IVR system provides the account information input by the current user to the voice recommendation system, so that the voice recommendation system acquires the network behavior data to acquire the demand of the current user, thereby displaying the voice service modules that better meet the user demand to the current user.

The above two example embodiments are used to illustrate two modes of acquiring the service demand data of the current user, and such two acquisition modes may be combined in the following example embodiment.

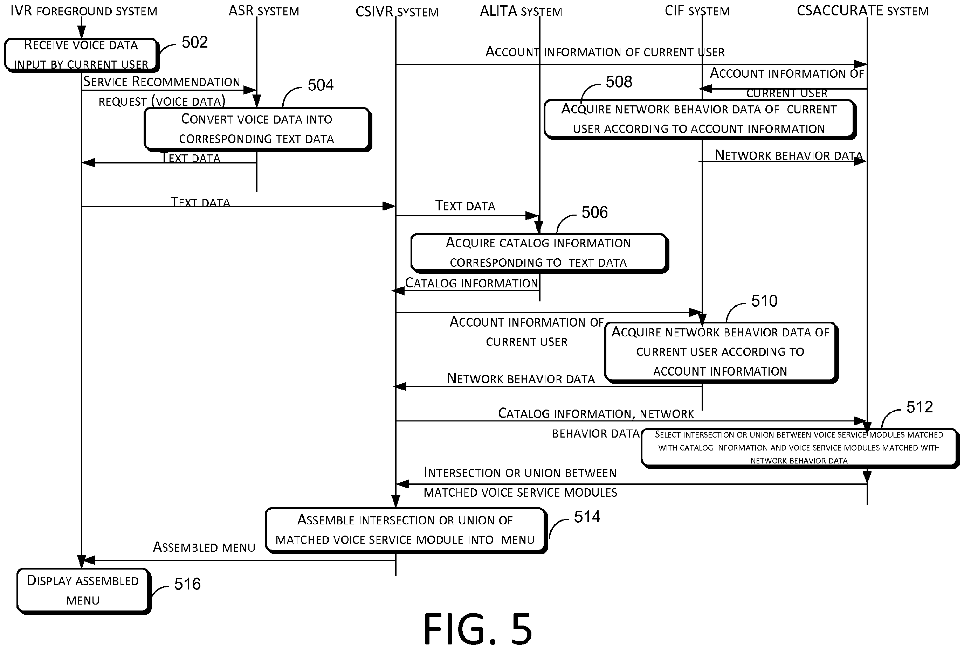

Referring to FIG. 5, the present disclosure provides a fifth example embodiment of the voice display method. Unlike other embodiments, in this example embodiment, the service demand data includes the network behavior data of the current user and the data input by the current user actively.

The example embodiment includes the following operations.

At a first step, an IVR system establishes an IVR call connection with a current user.

In this step, the IVR system may establish the IVR call connection with the current user passively, or establish the IVR call connection with the current user actively. For example, the IVR system may initiates an IVR call request to the current user actively when detecting an abnormal behavior of the current user, such as, detecting behavior error information of the current user on a network operation. At 502, the IVR system receives voice data input by the current user.

At a second step, the IVR system sends the service recommendation request for the current user to the voice recommendation system, so that the voice recommendation system acquires voice data input by the current user and account information of the current user from the IVR system, converts the voice data into corresponding text data at 504. For example, at 506, catalog information is acquired corresponding to the text data. The voice recommendation system also acquires network behavior data of the current user based on the account information at 508 and 510, uses the text data and the network behavior data together as the service demand data, and acquires the one or more voice service modules recommended to the current user according to the service demand data at 512 and returns them to the IVR system.

The voice service modules matched with the service demand data of the current user are an intersection or union between the voice service modules matched with the text data among the preset voice service modules and the voice service modules matched with the network behavior data among the preset voice service modules.

In the example embodiment, the modes of acquiring the user demand data in the second example embodiment and the third example embodiment of the method are combined. Therefore, relevant portions may refer to the above two example embodiments, and this example embodiment merely emphasizes the differences from the above two example embodiments.

FIG. 5 also provides an example module composing form of the IVR system and the voice recommendation system of this embodiment. The IVR system may include an IVR foreground system and a CSIVR system, and the voice recommendation system includes a CSACCURATE system, a CIF system, and an ASR system. The IVR foreground system converts the voice data input by the current user into corresponding text data via the ASR system and sends the text data to the CSIVR system. The CSIVR system sends the account information of the current user to the CSACCURATE system, and the CSACCURATE system acquires the network behavior data of the current user from the CIF system according to the account information. The CSIVR system sends the text data and the network behavior data to the CSACCURATE system, and the CSACCURATE system performs a matching according to the text data and the network behavior data respectively to acquire the voice service modules recommended to the current user. It should be noted that such an example module composing form in FIG. 5 does not limit the embodiments of the present disclosure.

Since in FIG. 5 the voice data input by the current user is firstly acquired, and then the account information of the current user is acquired, the voice data may be acquired directly from the service recommendation request. Furthermore, if, in other embodiments of the present disclosure, the account information of the current user is firstly acquired, and then the voice data input by the current user is acquired, the account information may be acquired directly from the service recommendation request.

At a third step, the IVR system assembles the voice service modules recommended to the current user into a menu at 514 for voice display at 516.

In the example embodiment, the voice service modules recommended to the current user are a union between the voice service modules matched with the text data and the voice service modules matched with the network behavior data. For example, the voice service modules matched with the text data selected from the preset voice service modules include A1, A2, A3, and A4. The voice service modules matched with the network behavior data from the preset voice service modules include A1, A2, B1, and B2. Therefore, the voice service modules finally recommended to the current user include A1, A2, A3, A4, B1, and B2. The repeated voice service module only needs to be display once.

In this step, when the menu is assembled, a preset number of voice service modules is selected. For example, 4 voice service modules are selected at random. A priority in the selection may be given to the repeated voice service modules.

Moreover, when the voice service modules recommended to the current user are assembled into the menu, the IVR system sets the voice service modules matched with both the text data and the network behavior to have a high priority, and the high priority is used for display in priority. For example, in the above example, A1 and A2 are set at a priority displaying position of the menu, and A3, A4, B1, and B2 are display after A1 and A2. For another example, the IVR system may further set a priority of the voice service modules that are merely matched with the text data to be higher than that of the voice service modules that are merely matched with the network behavior data.

As shown from the above technical solution, in the example embodiment, the IVR system provides the voice data input by the current user and the account information of the current user to the voice recommendation system, so that the voice recommendation system converts the voice data into the corresponding text data, and acquires the network behavior data according to the account information to acquire the demand of the current user, thereby displaying the voice service modules that can better meet the user demand to the current user.

In the embodiments of the present disclosure, after the voice service modules recommended to the current user are assembled into the menu for voice display, a particular service may be provided to the current user according to the feedback operation of the current user. Please see example detailed operations as follows.

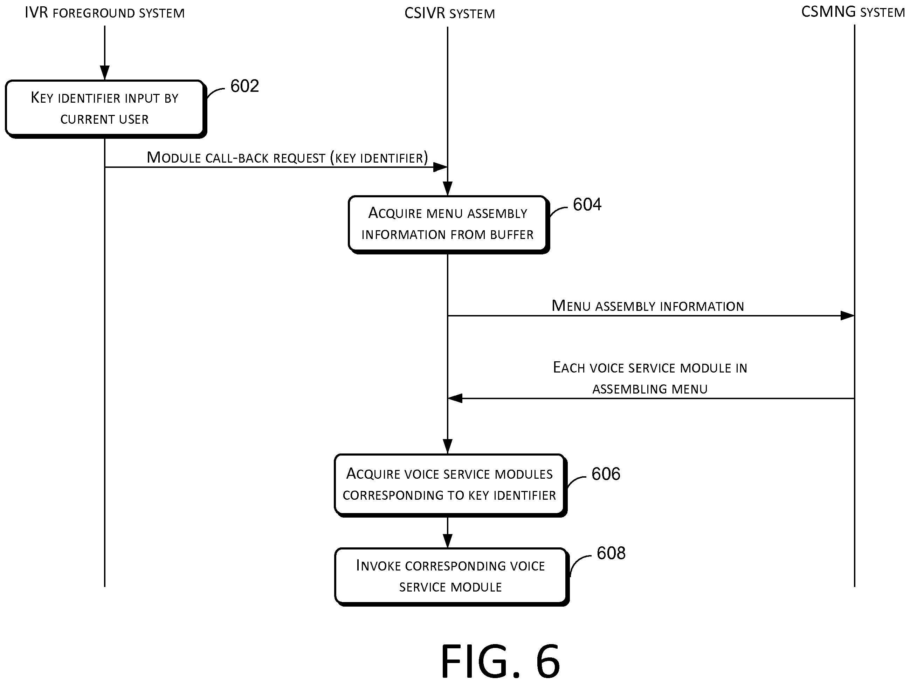

As shown in FIG. 6, in any one of the example method embodiments of the present disclosure, after assembling the voice service modules recommended to the current user into a menu and performing voice display, the method may further include the following operations.

At a first step, at 602, the IVR system acquires the interface operation information input by the current user.

The interface operation information indicates the operation information returned by the current user via the interactive interface. For example, as shown in FIG. 6, the IVR foreground system acquires a key identifier input by the current user. Certainly, in addition to the key identifier, the interface operation information may also be an icon identifier or the like selected by the operations such as a slide or a click, which will not be limited in the embodiments of the present disclosure.

At a second step, the IVR system acquires the service operation corresponding to the interface operation information based on the menu assembly information. For example, at 604, the menu assembly information is acquired from memory such as buffer.

The assembly information indicates the corresponding relationship between the interactive interface and the voice service module during the assembling of the menu, and therefore, the service operation corresponding to the interface operation information is acquired according to the assembly information. For example, the assembly information indicates that key 1 corresponds to returning to the previous menu, and the interface operation information is key 1, so that the acquired corresponding service operation is to return to the previous menu.

At a third step, the IVR system executes the corresponding service operation. At 606, the voice service modules corresponding to the key identifier are acquired. At 608, a corresponding service module is invoked.

The IVR system may execute the corresponding service operation by invoking a corresponding voice service module. The service operation, for example, includes returning to the previous module, entering the next module, sending a message, etc.

For example, as shown in FIG. 6, when acquiring the key identifier (for example, key 1) input by the current user, the IVR foreground system sends a module call-back request to the CSIVR system. The request includes the key identifier. The CSIVR system, after receiving the request, acquires the menu assembly information from memory such as buffer of the CSIVR system, and acquires each voice service module during the assembling of the menu via a CSMNG (i.e., Customer Service Management) system. If the assembly information does not exist in the buffer, the CSIVR system may acquire the assembly information from the CSMNG system directly, and further acquire each voice service module during the assembling of the menu. Thereafter, the CSIVR system acquires, such as through a traverse matching, the voice service module corresponding to the key identifier (for example, key 1). If the key identifier (for example, key 1) corresponds to returning to the previous menu, the CSIVR system provides the service of returning to the previous menu by returning the corresponding previous module to the IVR foreground system. If the key identifier (for example, key 1) corresponds to the service of sending a message, the CSIVR system sends the corresponding message to the corresponding terminal of the user by invoking a message sending module.

Corresponding to the above example method embodiments, the present disclosure further provides apparatus example apparatus embodiments of the IVR system.

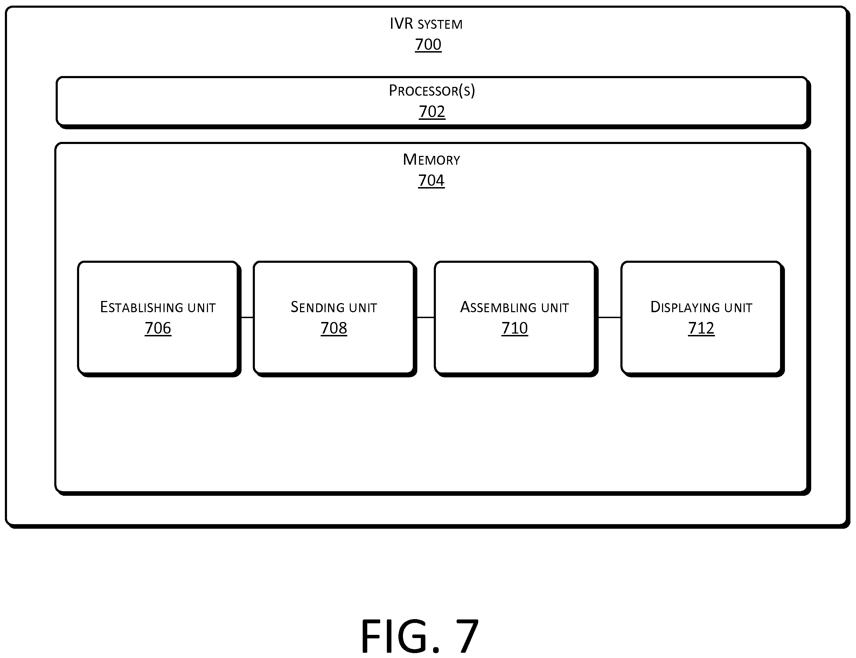

Referring to FIG. 7, the present disclosure provides a first example embodiment of the voice recommendation system, which corresponds to the first example embodiment of the voice display method.

In FIG. 7, an IVR system 700 includes one or more processor(s) or data processing unit(s) 702 and memory 704. The IVR system 700 may further include one or more input/output devices and network interfaces (not shown in FIG. 7). The memory 704 is an example of computer readable media.

Computer readable media include permanent, nonpermanent, mobile and immobile media, which may implement information storage through any method or technologies. The information may be computer-readable or computer-executable instructions, data structures, program modules or other data. Examples of computer readable media include, but are not limited to, Phase-change RAMs (PRAMs), Static RAMs (SRAMs), Dynamic RAMs (DRAMs), other types of Random Access Memories (RAMs), Read-Only Memories (ROMs), Electrically Erasable Programmable Read-Only Memories (EEPROMs), flash memories or other internal memory technologies, Compact Disk Read-Only Memories (CD-ROMs), Digital Versatile Discs (DVDs) or other optical memories, cassettes, cassette and disk memories or other magnetic memory devices or any other non-transmission media, which may be used for storing information which may be accessed by the computation device. According to the definitions herein, the computer readable media does not include transitory media such as a modulated data signal and a carrier wave.

The memory 704 may store therein a plurality of modules or units including an establishing unit 706, a sending unit 708, an assembling unit 710, and a displaying unit 712.

The establishing unit 706 establishes an IVR call connection with a current user.

In this step, the establishing unit 706 may establish the IVR call connection with the current user passively. For example, the user, when generating a service demand, establishes the IVR call connection with the establishing unit 706 by dialing the number of the IVR system actively. The establishing unit 706 may also establish the IVR call connection with the current user actively. For example, when detecting an abnormal situation in the user operation, such as continuous and repeated user login failure, the establishing unit 706 may initiate an IVR call request to the user actively. After that the user allows the call request, the IVR call connection is established.

The sending unit 708 sends a service recommendation request for the current user to a voice recommendation system to acquire the voice service modules recommended to the current user via the voice recommendation system.

After the IVR call connection is established with the current user, unlike the conventional techniques, the techniques in the example embodiment of the present disclosure no longer display according to a fixed voice display process, but sends the service recommendation request for the current user to the voice recommendation system via the sending unit 708 to acquire the voice service modules recommended to the current user from the voice recommendation system, thereby realizing personalized display to the current user.

The service recommendation request sent by the sending unit 708 may have various forms, which indicate that the IVR system 700 needs to perform personalized voice display on the current user. For example, the IVR system 700 may send data that can indicate the demand of the current user directly or indirectly, such as the voice data input by the current user or the account information of the current user. At this time, the data that indicates the demand of the current user directly or indirectly is used as the service recommendation request directly.

The voice service modules recommended to the current user are the voice service module matched with the service demand data of the current user among preset voice service modules. That is, the service recommendation request enables the voice recommendation system to select the voice service modules matched with the service demand data of the current user from the preset voice service modules, and return them to the IVR system 700. Therefore, the personalized display content better meets the demand of the current user.

The service demand data of the current user indicates the service demand of the current user who establishes the IVR call connection with the IVR system 700. The example embodiment of the present disclosure does not limit the mode of acquiring the service demand data, which may use the data input by the current user actively as the service demand data. For example, after establishing the IVR call with the IVR system, the current user may input the voice data according to the voice prompt, and the voice data reflects the service demand of the current user, and therefore, the voice data is converted into corresponding text data as the service demand data. Alternatively, the user behavior may also be analyzed to acquire service demand data. For example, during a period before and/or after the current user establishes the IVR call connection, corresponding network behavior data of the user may be generated, such as error information for user login password error, and financial operation information. Such network behavior data also reflects the user service demand, and therefore it is used as the service demand data. Certainly, the above text data and the network behavior data of the user may be used together as the service demand data.

The assembling unit 710 assembles the voice service modules recommended to the current user into a menu for voice display.

After acquiring one or more voice service modules recommended to the user from a service recommendation system, the assembling unit 710 may further assemble the one or more voice service modules into a menu and perform display to the current user to provide personalized services to the current user.

As shown from the technical solution, in the example embodiment, after the establishing unit 706 establishes the IVR call connection with the current user, the sending unit 708 may send the service recommendation request for the current user to the voice recommendation system, thereby acquiring the voice service modules recommended to the current user. Thereafter, the assembling unit 710 will assemble the voice service modules recommended to the current user into a menu for display. The voice service modules recommended to the current user are the voice service modules matched with the service demand data of the current user among the preset voice service modules, so that the IVR system 700 no longer displays according to a fixed voice display process, but displays the voice service modules that better meet the demand of the current user in a personalized manner. Therefore, the current user, when acquiring corresponding services, is able to locate desirable voice service modules without executing feedback operations repeatedly, which shortens the voice display time and decreases the call loss, thereby reducing the usage of system resource.

In the example embodiment, if no module matched with the service demand data exists among the preset voice modules, i.e., the number of the voice service modules recommended to the current users is equal to 0, the assembling unit 710 may inform the displaying unit 712 to perform the voice display according to a fixed voice display process directly.

It should be noted that, in the example embodiment, the preset voice service modules may exist in the form of sets. For example, one or more voice service module sets are preset, wherein each voice service module set includes a plurality of voice service modules associated by levels. The sending unit 708 acquires the voice service module set recommended to the current user, and the voice service module set recommended to the current user is the voice service module set matched with the service demand data of the current user among the preset voice service module sets.

In the example embodiment, when the sending unit 708 acquires the voice service modules recommended to the current user from the voice recommendation system, the assembling unit 710 may assemble those voice service modules into a menu. An example implementation of assembling the menu by the assembling unit 710 will be described in another example embodiment below.

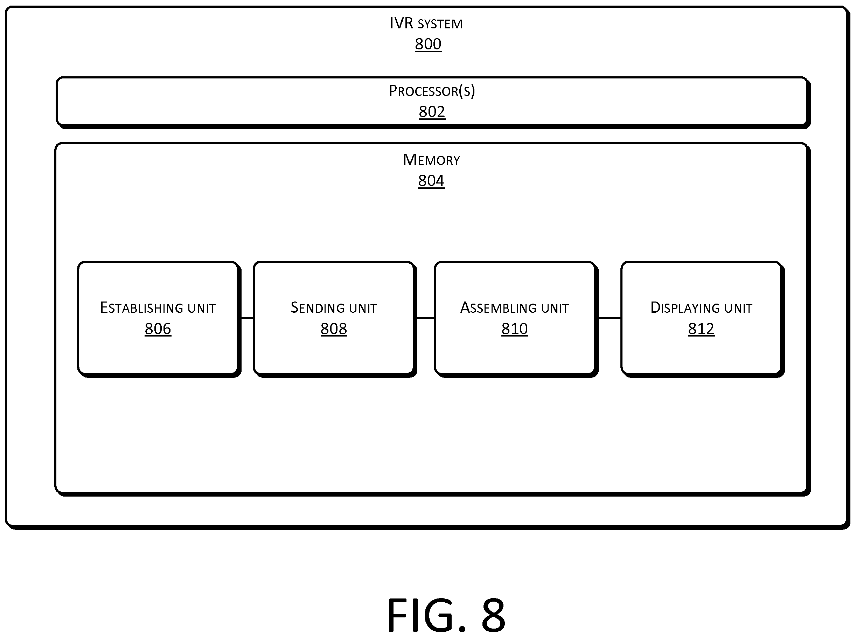

Referring to FIG. 8, the present disclosure provides a second example embodiment of the IVR system, which corresponding to the second example embodiment of the voice display method.

In FIG. 8, an IVR system 800 includes one or more processor(s) or data processing unit(s) 802 and memory 804. The IVR system 800 may further include one or more input/output devices and network interfaces (not shown in FIG. 8). The memory 804 is an example of computer readable media.

The memory 804 may store therein a plurality of modules or units including an establishing unit 806, a sending unit 808, an assembling unit 810, and a displaying unit 812.

The establishing unit 806 establishes an IVR call connection with a current user. The establishing unit 806 may establish the IVR call connection with the current user passively, or establish the IVR call connection with the current user actively.

The sending unit 808 sends a service recommendation request for the current user to a voice recommendation system to acquire voice service modules recommended to the current user via the voice recommendation system.

The voice service modules recommended to the current user are the voice service modules matched with the service demand data of the current user among the preset voice service modules.

The service demand data of the current user can indicate the service demand of the current user who establishes the IVR call connection with the IVR system 800, which may be text data converted from voice data input by the current user, network behavior data of the current user acquired according to account information of the current user, or a combination of the above two types of data.

The assembling unit 810 determines a number of the voice service modules recommended to the current user. If the number is equal to 1, the displaying unit 812 performs voice display for the voice service module recommended to the current user directly. If the number is greater than 1, the assembling unit 810 performs an association operation between the voice service modules recommended to the current user and an interactive interface, and the displaying unit 812 performs the voice display for the voice service modules recommended to the current user according to the association relationship.

In the example embodiment, after the assembling unit 810 assembles the one or more voice service modules recommended to the current user and acquired from the voice recommendation system into a menu, the displaying unit 812 performs the voice display of the assembled menu to the current user. During the assembling of the menu, the assembling unit 810 may select an assembling policy according to the number of the abovementioned one or more voice service modules.

When the number of the voice service modules recommended to the current user is equal to 1, the assembling unit 810 displays such 1 voice service module to the current user directly via the displaying unit 812. When the number of the voice service modules recommended to the current user is at least two, and when the at least two voice service modules are display to the current user, the current user needs to select one corresponding voice service module according to his/her demand. Therefore, the assembling unit 810 firstly associates the at least two voice service modules with the interactive interface. For example, key 1 is associated with a password retrieval voice module, and key 2 is associated with a password modification voice module. Thereafter, the displaying unit 812 displays the at least two voice service modules to the current user according to the association relationship between the voice service module and the interactive interface. Displaying to the user according to the association relationship actually refers to displaying the association relationship to the current user. For example, when "if password retrieval is needed, please press 1, and if the password needs to be modified, please press 2" is display to the current user, services provided by corresponding voice service modules are acquired according to the user feedback operation.

When performing the association operation, the assembling unit 810 may associate the voice service modules recommended to the current user and a fixed menu with the interactive interface. For example, keys 1 to 4 are associated with four voice service modules recommended to the current user, and Key 0 is associated with the fixed menu. The fixed menu refers to a preset menu including the voice service modules, which will not vary with the change of the current user who establishes the IVR call connection with the IVR system. For example, the fixed menu may be a conventional menu in the conventional techniques. Although the fixed menu will not vary with the change of the current user, the composing form of the voice service modules in the fixed menu may be adjusted.

It should be noted that, before assembling the menu, the assembling unit 810 may optimize the voice service modules recommended by the current user. For example, the number of the voice service modules may be limited in a present range, such as 4. Alternatively, a part of voice service modules may be set to have a high priority, thereby realizing the functions such as priority displaying.

As shown from the above technical solution, in the example embodiment, the techniques of the present disclosure emphasize that, according to the number of the voice service modules recommended to the current user, different policies are selected to assemble the voice service modules into the menu, and the assembled menu is displayed to the current user via audio.

Actually, the example embodiment highlights how to display the voice service modules to the current user. However, in some scenes, the user needs a higher level service. For example, when the current problem of the user is serious and cannot be solved by the preset voice service modules, it is desirable to provide human services to the user. In fact, an ordinary IVR system switches to the human service system automatically. For example, when we are dialing a service hotline such as 10086, one key is usually reserved for switching to the human service directly. The implementation of switching the user to the human service system will be set forth in detail in the example embodiments of the present disclosure as follows.

When acquiring the voice service modules recommended to the current user via the voice recommendation system, the sending unit 808 may further acquire human service modules recommended to the current user via the voice recommendation system.

If the voice service modules recommended to the current user is not equal to 0, it indicates that the voice service modules matched with the demand of the current user exist at this time and therefore, no matter whether the voice recommendation system returns the human service modules or not, the human service modules are ignored. The assembling unit 810 executes assembling of the voice service modules recommended to the current user into a menu and the displaying unit 812 performs audio or voice display.

If the number of the voice service modules recommended to the current user is equal to 0, and the number of the human service modules recommended to the current user is not equal to 0, it indicates that no voice service module matched with the demand of the current user exists at this time, but only the human service module exists. Therefore, the assembling unit 810 switches to any one of the human service modules recommended to the current user, and at this time, the assembling unit 810 no longer executes assembling of the voice service modules recommended to the current user into a menu, which will be voice display by the displaying unit 812.

In addition, if the number of the voice service modules recommended to the current user and the number of the human service modules recommended to the current user are both equal to 0, it indicates that no service module matched with the demand of the current user is acquired at this time, and the displaying unit 812 may perform voice display according to a fixed voice display process.

In the example embodiments of the present disclosure, the IVR system 800 acquires the voice service modules recommended to the current user via the voice recommendation system. The voice service modules refer to the voice service modules matched with the service demand data of the current user among the preset voice service modules. In fact, the service demand data may be acquired in many ways, for example, from the data input by the current user actively, the network behavior data of the current user, or a combination of the above two types of data, which will be described below in the following three cases.

In a first case, the service demand data is the data input by the current user actively.

In any of the above example system embodiments, the sending unit sends a service recommendation request for the current user to a voice recommendation system to acquire voice service modules recommended to the current user via the voice recommendation system, which may include the following operations.

The sending unit sends the service recommendation request for the current user to the voice recommendation system, so that the voice recommendation system acquires the voice data input by the current user from the IVR system, converts the voice data into corresponding text data as the service demand data, and acquires the voice service modules recommended to the current user according to the service demand data and returns them to the IVR system.

In a second case, the service demand data is the network behavior data of the current user.

The sending unit sends a service recommendation request for the current user to a voice recommendation system to acquire voice service modules recommended to the current user via the voice recommendation system, which may include the following operations.

The sending unit sends the service recommendation request for the current user to the voice recommendation system, so that the voice recommendation system acquires the account information of the current user from the IVR system, acquires the network behavior data of the current user as the service demand data based on the account information, and acquires the voice service modules recommended to the current user according to the service demand data and returns to the IVR system.

In a third case, the service demand data includes the data input by the current user actively and the network behavior data of the current user.

The sending unit sends a service recommendation request for the current user to a voice recommendation system to acquire voice service modules recommended to the current user via the voice recommendation system, which may include the following operations.

The sending unit sends the service recommendation request for the current user to the voice recommendation system, so that the voice recommendation system acquires voice data input by the current user and account information of the current user from the IVR system, converts the voice data into corresponding text data and acquires network behavior data of the current user based on the account information, uses the text data and the network behavior data together as the service demand data, and acquires the voice service modules recommended to the current user according to the service demand data and returns them to the IVR system.

The voice service modules matched with the service demand data of the current user are an intersection or a union between the voice service modules matched with the text data and the voice service modules matched with the network behavior data.

The relevant portions of the above three cases may refer to the third example embodiment to the fifth example embodiment of the method provided in the present disclosure, which will not be detailed herein.

In the example embodiments of the present disclosure, after the assembling unit assembles voice service modules recommended to the current user into the menu and the displaying unit performs voice display, a particular service may be provided to the current user according to the feedback operation of the current user, which will be described in detail as follows.

In any of the example embodiments provided by the present disclosure, the IVR system may further include a first acquisition unit, a second acquisition unit, and a service execution unit (not shown in the FIGs.).

The first acquisition unit, after the assembling unit assembles the voice service modules recommended to the current user into a menu and the displaying unit performs voice display, acquires the interface operation information input by the current user.

The interface operation information indicates the operation information returned by the current user via the interactive interface. For example, the first acquisition unit acquires a key identifier input by the current user. Of course, in addition to the key identifier, the interface operation information may also be an icon identifier or the like selected by the operations such as a slide or a click, which will not be limited in the embodiments of the present disclosure.

The second acquisition unit acquires the service operation corresponding to the interface operation information based on the menu assembly information.

The assembly information indicates the corresponding relationship between the interactive interface and the voice service module during the assembling of the menu, and therefore, the service operation corresponding to the interface operation information is acquired according to the assembly information. For example, the assembly information indicates that key 1 corresponds to returning to the previous menu, and the interface operation information is key 1 so that the acquired corresponding service operation is to return to the previous menu.

The service execution unit executes the corresponding service operation.

The IVR system may execute the corresponding service operation by invoking a corresponding voice service module.

The service operation includes returning to the previous module, entering the next module, sending a message, etc.

It should be noted that, in this text, the relationship terms such as "first" and "second" are merely used to distinguish an entity or operation from another entity or operation, and it is unnecessary to require or imply that any actual relationship or sequence exists among these entities or operations. Moreover, the term "include" and variants thereof are intended to cover non-exclusive inclusion, so that an expression of "including a process, a method, an article or a device of a series of elements" not only includes these elements, but also includes other elements not explicitly listed, or further includes inherent elements of the process, the method, the article or the device. Under the condition of without further limitation, an element as defined by a statement " including a..." is not exclusive of additional identical elements in the process, the method, the article or the device of the element.

The above descriptions are merely preferred embodiments of the present disclosure, and are not used to limit the protection scope of the present disclosure. Any modification, equivalent replacement, and improvement made with the principle of the present disclosure shall be included in the protection scope of the present disclosure.

## Claims

1. A method comprising:
establishing (102, 202) a call connection by an interactive voice response (IVR) system, the IVR system providing voice services with respect to a user account to a user;
acquiring (104, 204) a number of service modules recommended to the user, the service modules including one or more voice service modules and/or one or more human service modules, and the acquiring including:
acquiring account information of the user;
acquiring (402) network behavior data of the user as service demand data based on the account information; and
acquiring (404) the service modules recommended to the user according to the service demand data; and
assembling (106, 310, 406) the service modules into a menu for a voice display according to an assembling policy, the assembling policy ignoring any recommended human service module(s) when a number of voice service modules in the service modules is not equal to zero.

2. The method of claim 1, wherein the one or more voice service modules are voice service modules matched with service demand data of the user among preset voice service modules.

3. The method of claim 1 or claim 2, wherein the assembling (106) comprises:
performing (208) the voice display for a voice service module in response to determining (206) that the number of the voice service modules is one.

4. The method of claim 1 or claim 2, wherein the assembling (106) comprises:
determining (206) that the number of the voice service modules is greater than one;
performing (210) an association operation between the voice service modules and an interactive interface; and
performing (210) the voice display for the voice service modules according to an association relationship between the voice services modules and the interactive interface.

5. The method of any one of claims 1 to 4, wherein the acquiring (104, 204) further comprises:
acquiring (302) voice data input by the user;
converting (304, 306) the voice data into corresponding text data; and
using the text data and the network behavior data together as service demand data.

6. The method of claim 5, wherein the one or more voice service modules include a first voice service module matching the text data and a second voice service module matching the network behavior data.

7. The method of any preceding claim, further comprising:
acquiring (602) interface operation information input by the user;
acquiring (606) a service operation corresponding to the interface operation information based on assembling information of the menu; and
executing (608) the corresponding service operation.

8. An interactive voice response (IVR) system (700, 800) comprising:
an establishing unit (706, 806) that establishes (102, 202) a call connection with a user;
a sending unit (708, 808) that sends a service recommendation request for the user to a voice recommendation system to acquire (104, 204) a number of service modules recommended to the user, the service modules including one or more voice service modules and/or one or more human service modules, the acquiring including:
acquiring account information of the user;
acquiring (402) network behavior data of the user as service demand data based on the account information; and
acquiring (404) the service modules recommended to the user according to the service demand data; and
an assembling unit (710, 810) that assembles (106, 310, 406) the voice service modules into a menu for a voice display according to an assembling policy, the assembling policy ignoring any recommended human service module(s) when a number of voice service modules in the service modules is not equal to zero.

9. The IVR system (700, 800) of claim 8, wherein the assembling unit (710, 810) further:
determines (206) that the number of the voice service modules is greater than one;
performs (210) an association operation between the voice service modules and an interactive interface; and
performs (210) the voice display for the voice service modules according to an association relationship between the voice services modules and the interactive interface.

10. The IVR system (700, 800) of claim 8 or claim 9, wherein the service demand data further includes:
text data converted from voice data input by the user.

11. One or more memories (704, 804) having stored thereon computer executable instructions executable by one or more processors (702, 802) to perform operations comprising:
establishing (102, 202) a call connection by an interactive voice response (IVR) system, the IVR system providing voice services with respect to a user account to a user;
acquiring (104, 204) a number of service modules recommended to the user, the service modules including one or more voice service modules and/or one or more human service modules, and the acquiring including:
acquiring account information of the user;
acquiring (402) network behavior data of the user as service demand data based on the account information; and
acquiring (404) the service modules recommended to the user according to the service demand data; and
assembling (106, 310, 406) the voice service modules into a menu for a voice display according to an assembling policy, the assembling policy ignoring any recommended human service module(s) when a number of voice service modules in the service modules is not equal to zero.

## Patentansprüche

1. Verfahren, umfassend:
Aufbauen (102, 202) einer Anrufverbindung durch ein IVR-System ("Interactive Voice Response"), wobei das IVR-System Sprachdienste in Bezug auf ein Benutzerkonto für einen Benutzer bereitstellt;
Erfassen (104, 204) einer Anzahl von Dienstmodulen, die dem Benutzer empfohlen werden, wobei die Dienstmodule ein oder mehrere Sprachdienstmodule und/oder ein oder mehrere menschliche Dienstmodule beinhalten, und das Erwerben beinhaltet:
Erfassen von Kontoinformationen des Benutzers;
Erfassen (402) von Netzverhaltensdaten des Benutzers als Dienstanforderungsdaten basierend auf den Kontoinformationen; und
Erfassen (404) der dem Benutzer gemäß den Dienstanforderungsdaten empfohlenen Dienstmodule; und
Zusammenfügen (106, 310, 406) der Dienstmodule in ein Menü für eine Sprachanzeige gemäß einer Zusammenfügerichtlinie, wobei die Zusammenfügerichtlinie alle empfohlenen menschlichen Dienstmodule ignoriert, wenn eine Anzahl von Sprachdienstmodulen in den Dienstmodulen nicht gleich Null ist.

2. Verfahren nach Anspruch 1, wobei die einen oder mehreren Sprachdienstmodule Sprachdienstmodule sind, die mit den Dienstanforderungsdaten des Benutzers unter den voreingestellten Sprachdienstmodulen abgestimmt sind.

3. Verfahren nach Anspruch 1 oder Anspruch 2, wobei das Zusammenfügen (106) umfasst:
Durchführen (208) der Sprachanzeige für ein Sprachdienstmodul als Reaktion auf das Bestimmen (206), dass die Anzahl der Sprachdienstmodule eins ist.

4. Verfahren nach Anspruch 1 oder Anspruch 2, wobei das Zusammenfügen (106) umfasst:
Bestimmen (206), dass die Anzahl der Sprachdienstmodule größer als eins ist;
Durchführen (210) eines Zuordnungsverfahrens zwischen den Sprachdienstmodulen und einer interaktiven Schnittstelle; und
Durchführen (210) der Sprachanzeige für die Sprachdienstmodule gemäß einer Zuordnungsbeziehung zwischen den Sprachdienstmodulen und der interaktiven Schnittstelle.

5. Verfahren nach einem der Ansprüche 1 bis 4, wobei das Erfassen (104, 204) ferner umfasst:
Erfassen (302) von Sprachdaten, die vom Benutzer eingegeben wurden;
Umwandeln (304, 306) der Sprachdaten in entsprechende Textdaten; und
Verwenden der Textdaten und der Netzverhaltensdaten zusammen als Dienstanforderungsdaten.

6. Verfahren nach Anspruch 5, wobei das eine oder die mehreren Sprachdienstmodule ein erstes Sprachdienstmodul beinhalten, das den Textdaten entspricht, und ein zweites Sprachdienstmodul, das den Netzverhaltensdaten entspricht.

7. Verfahren nach einem der vorhergehenden Ansprüche, ferner umfassend:
Erfassen (602) von Schnittstellenbetriebsinformationen, die vom Benutzer eingegeben werden;
Erfassen (606) eines Dienstvorgangs, der den Schnittstellenbetriebsinformationen basierend auf Zusammenfügeinformationen des Menüs entspricht; und
Ausführen (608) des entsprechenden Dienstvorgangs.

8. Interaktives Sprachreaktionssystem (IVR) (700, 800), umfassend:
eine Aufbaueinheit (706, 806), die eine Anrufverbindung mit einem Benutzer aufbaut (102, 202);
eine Sendeeinheit (708, 808), die eine Dienstanforderung an den Benutzer an ein Sprachempfehlungssystem sendet, um eine Anzahl von Dienstmodulen, die dem Benutzer empfohlen werden, zu erfassen (104, 204), wobei die Dienstmodule ein oder mehrere Sprachdienstmodule und/oder ein oder mehrere menschliche Dienstmodule beinhalten, wobei die Erfassung Folgendes beinhaltet:
Erfassen von Kontoinformationen des Benutzers;
Erfassen (402) von Netzverhaltensdaten des Benutzers als Dienstanforderungsdaten basierend auf den Kontoinformationen; und
Erfassen (404) der dem Benutzer gemäß den Dienstanforderungsdaten empfohlenen Dienstmodule; und
eine Zusammenfügeeinheit (710, 810), die die Sprachdienstmodule in ein Menü für eine Sprachanzeige gemäß einer Zusammenfügepolitik zusammenfügt (106, 310, 406), wobei die Zusammenfügepolitik alle empfohlenen menschlichen Dienstmodule ignoriert, wenn eine Anzahl von Sprachdienstmodulen in den Dienstmodulen nicht gleich Null ist.

9. IVR-System (700, 800) nach Anspruch 8, wobei die Zusammenfügeeinheit (710, 810) ferner:
bestimmt (206), dass die Anzahl der Sprachdienstmodule größer als eins ist;
ein Zuordnungsverfahren zwischen den Sprachdienstmodulen und einer interaktiven Schnittstelle durchführt (210); und
die Sprachanzeige für die Sprachdienstmodule gemäß einer Zuordnungsbeziehung zwischen den Sprachdienstmodulen und der interaktiven Schnittstelle durchführt (210).

10. IVR-System (700, 800) nach Anspruch 8 oder Anspruch 9, wobei die Dienstanforderungsdaten ferner Folgendes beinhalten:
Textdaten, die aus der Eingabe von Sprachdaten durch den Benutzer umgewandelt wurden.

11. Ein oder mehrere Speicher (704, 804) mit darauf gespeicherten computerausführbaren Anweisungen, die von einem oder mehreren Prozessoren (702, 802) ausgeführt werden können, um Vorgänge durchzuführen, umfassend:
Aufbauen (102, 202) einer Anrufverbindung durch ein IVR-System ("Interactive Voice Response"), wobei das IVR-System Sprachdienste in Bezug auf ein Benutzerkonto für einen Benutzer bereitstellt;
Erfassen (104, 204) einer Anzahl von Dienstmodulen, die dem Benutzer empfohlen werden, wobei die Dienstmodule ein oder mehrere Sprachdienstmodule und/oder ein oder mehrere menschliche Dienstmodule beinhalten, und das Erwerben beinhaltet:
Erfassen von Kontoinformationen des Benutzers;
Erfassen (402) von Netzverhaltensdaten des Benutzers als Dienstanforderungsdaten basierend auf den Kontoinformationen; und
Erfassen (404) der dem Benutzer gemäß den Dienstanforderungsdaten empfohlenen Dienstmodule; und
Zusammenfügen (106, 310, 406) der Sprachdienstmodule in ein Menü für eine Sprachanzeige gemäß einer Zusammenfügerichtlinie, wobei die Zusammenfügerichtlinie alle empfohlenen menschlichen Dienstmodule ignoriert, wenn eine Anzahl von Sprachdienstmodulen in den Dienstmodulen nicht gleich Null ist.

## Revendications

1. Procédé consistant :
à établir (102, 202) une connexion d'appel au moyen d'un système de réponse vocale interactive (IVR), le système de réponse IVR offrant des services vocaux par rapport à un compte d'utilisateur à un utilisateur ;
à acquérir (104, 204) un certain nombre de modules de service recommandés à l'utilisateur, les modules de service comprenant un ou plusieurs modules de service vocal et/ou un ou plusieurs modules de service humain et l'acquisition consistant :
à acquérir des informations de compte de l'utilisateur ;
à acquérir (402) des données de comportement de réseau de l'utilisateur sous forme de données de demande de service en se basant sur les informations de compte ; et
à acquérir (404) les modules de service recommandés à l'utilisateur en fonction des données de demande de service ; et
à assembler (106, 310, 406) les modules de service dans un menu pour un affichage vocal en fonction d'une politique d'assemblage, la politique d'assemblage ignorant le ou tous les modules de service humain recommandés lorsque le nombre de modules de service vocal dans les modules de service n'est pas égal à zéro.

2. Procédé selon la revendication 1, dans lequel le ou les modules de service vocal sont des modules de service vocal mis en correspondance avec des données de demande de service de l'utilisateur parmi des modules de service vocal prédéfinis.

3. Procédé selon la revendication 1 ou la revendication 2, dans lequel l'assemblage (106) consiste :
à réaliser (208) l'affichage vocal pour un module de service vocal à la suite de la détermination (206) que le nombre de modules de service vocal est un.

4. Procédé selon la revendication 1 ou la revendication 2, dans lequel l'assemblage (106) consiste :
à déterminer (206) que le nombre de modules de service vocal est supérieur à un ;
à effectuer (210) une opération d'association entre les modules de service vocal et une interface interactive ; et
à réaliser (210) l'affichage vocal pour les modules de service vocal en fonction d'une relation d'association entre les modules de service vocal et l'interface interactive.

5. Procédé selon l'une quelconque des revendications 1 à 4, dans lequel l'acquisition (104, 204) consiste en outre :
à acquérir (302) des données vocales entrées par l'utilisateur ;
à convertir (304, 306) les données vocales en données textuelles correspondantes ; et
à utiliser les données textuelles et les données de comportement de réseau conjointement comme données de demande de service.

6. Procédé selon la revendication 5, dans lequel le ou les modules de service vocal comprennent un premier module de service vocal mettant en correspondance les données textuelles et un second module de service vocal mettant en correspondance les données de comportement de réseau.

7. Procédé selon l'une quelconque des revendications précédentes, consistant en outre :
à acquérir (602) des informations d'opération d'interface entrées par l'utilisateur ;
à acquérir (606) une opération de service correspondant aux informations d'opération d'interface en se basant sur des informations d'assemblage du menu ; et
exécuter (608) l'opération de service correspondante.

8. Système de réponse vocale interactive (IVR) (700, 800) comprenant :
une unité d'établissement (706, 806) qui établit (102, 202) une connexion d'appel avec un utilisateur ;
une unité d'envoi (708, 808) qui envoie une demande de recommandation de service pour l'utilisateur à un système de recommandation vocale pour acquérir (104, 204) un certain nombre de modules de service recommandés à l'utilisateur, les modules de service comprenant un ou plusieurs modules de service vocal et/ou un ou plusieurs modules de service humain et l'acquisition consistant :
à acquérir des informations de compte de l'utilisateur ;
à acquérir (402) des données de comportement de réseau de l'utilisateur sous forme de données de demande de service en se basant sur les informations de compte ; et
à acquérir (404) les modules de service recommandés à l'utilisateur en fonction des données de demande de service ; et
une unité d'assemblage (710, 810) qui assemble (106, 310, 406) les modules de service vocal dans un menu pour un affichage vocal en fonction d'une politique d'assemblage, la politique d'assemblage ignorant le ou tous les modules de service humain recommandés lorsque le nombre de modules de service vocal dans les modules de service n'est pas égal à zéro.

9. Système de réponse IVR (700, 800) selon la revendication 8, dans lequel l'unité d'assemblage (710, 810) en outre :
détermine (206) que le nombre de modules de service vocal est supérieur à un ;
effectue (210) une opération d'association entre les modules de service vocal et une interface interactive ; et
réalise (210) l'affichage vocal pour les modules de service vocal en fonction d'une relation d'association entre les modules de service vocal et l'interface interactive.

10. Système de réponse IVR (700, 800) selon la revendication 8 ou la revendication 9, dans lequel les données de demande de service comprennent en outre :
des données textuelles converties à partir de données vocales entrées par l'utilisateur.

11. Une ou plusieurs mémoires (704, 804) sur lesquelles sont stockées des instructions pouvant être exécutées par un ordinateur qui peuvent être exécutées par un ou plusieurs processeurs (702, 802) pour effectuer des opérations consistant :
à établir (102, 202) une connexion d'appel au moyen d'un système de réponse vocale interactive (IVR), le système de réponse IVR offrant des services vocaux par rapport à un compte d'utilisateur à un utilisateur ;
à acquérir (104, 204) un certain nombre de modules de service recommandés à l'utilisateur, les modules de service comprenant un ou plusieurs modules de service vocal et/ou un ou plusieurs modules de service humain et l'acquisition consistant :
à acquérir des informations de compte de l'utilisateur ;
à acquérir (402) des données de comportement de réseau de l'utilisateur sous forme de données de demande de service en se basant sur les informations de compte ; et
à acquérir (404) les modules de service recommandés à l'utilisateur en fonction des données de demande de service ; et
à assembler (106, 310, 406) les modules de service vocal dans un menu pour un affichage vocal en fonction d'une politique d'assemblage, la politique d'assemblage ignorant le ou tous les modules de service humain recommandés lorsque le nombre de modules de service vocal dans les modules de service n'est pas égal à zéro.
